(19) **Europäisches Patentamt European Patent Office Office européen des brevets**

(11) **EP 1 399 596 B1**

(12) **FASCICULE DE BREVET EUROPEEN**

(45) Date de publication et mention
de la délivrance du brevet:
**24.01.2007 Bulletin 2007/04**

(51) Int Cl.:
*C13F 1/02* (2006.01)       *A23P 1/02* (2006.01)
*B01J 2/00* (2006.01)       *B01D 1/18* (2006.01)

(21) Numéro de dépôt: **02762495.6**

(22) Date de dépôt: **26.06.2002**

(86) Numéro de dépôt international:
**PCT/FR2002/002215**

(87) Numéro de publication internationale:
**WO 2003/000936 (03.01.2003 Gazette 2003/01)**

(54) **PROCEDE DE SECHAGE D'UNE SOLUTION DE SACCHAROSE, PRODUIT TEL QU'OBTENU ET SON UTILISATION**

VERFAHREN ZUR TROCKNUNG EINER SACCHAROSELÖSUNG, SO ERHALTENES PRODUKT UND DESSEN VERWENDUNG

METHOD FOR DRYING A SACCHAROSE SOLUTION, PRODUCT THUS OBTAINED AND USE THEREOF

(84) Etats contractants désignés:
**AT BE CH CY DE DK ES FI FR GB GR IE IT LI LU MC NL PT SE TR**

(30) Priorité: **26.06.2001 FR 0108406**

(43) Date de publication de la demande:
**24.03.2004 Bulletin 2004/13**

(73) Titulaire: **TEREOS**
**02390 Origny Sainte Benoite (FR)**

(72) Inventeur: **WONG, Emile**
**01700 Neyron (FR)**

(74) Mandataire: **Grosset-Fournier, Chantal Catherine Grosset-Fournier & Demachy,**
**54, rue Saint-Lazare**
**75009 Paris (FR)**

(56) Documents cités:
**EP-A- 0 335 852          GB-A- 952 640**
**GB-A- 1 240 691          US-A- 3 735 792**

**EP 1 399 596 B1**

**Description**

L'invention concerne un procédé de séchage d'une solution de saccharose, ainsi que le produit obtenu selon ledit procédé. L'invention concerne également l'utilisation dudit produit, par exemple, pour la préparation de comprimés et de confiseries.

Le séchage d'une solution de saccharose peut être effectué par atomisation, procédé bien connu de l'art antérieur.

A ce titre, on peut citer le brevet GB 1,350,098 qui concerne un procédé de séchage par atomisation pour l'obtention de particules pulvérulentes à partir de solutions-mères, et notamment à partir de solutions de saccharose. Le procédé utilisé dans ce brevet nécessite le maintien en suspension de petits cristaux dans la solution et permet l'obtention d'un sucre non compressible.

Le brevet GB 1,240,691 concerne un procédé de production d'une composition de sucre solide non compressible qui comprend le séchage par atomisation d'un sirop de saccharose avec un taux de sucre inverti inférieur à 10% en masse et un taux en cendres inorganiques inférieur à 4% en masse. Dans ce procédé, les gouttes du sirop atomisé sont séchées par de l'air chaud. Le sirop de départ utilisé dans ce procédé est très concentré et au-delà de la saturation. Le recyclage de la poudre comme amorce de la cristallisation est important. Par ailleurs, le pourcentage d'humidité résiduelle du produit obtenu est supérieur à 1%.

Actuellement, les principaux sucres directement compressibles du marché sont le Dipac®, le Nutab® et l'Alvéo-sucre®.

Le Dipac® est obtenu par concentration d'une solution de sucre contenant des additifs. Le procédé d'obtention de ce sucre consiste à solidifier, par brassage mécanique, une solution sursaturée en saccharose. Les cristaux qui apparaissent dans la solution s'agglomèrent entre eux au fur et à mesure que la pâte se solidifie. Il s'agit donc d'un phénomène d'agglomération in situ de cristaux.

Le Nutab® est obtenu par compactage d'un mélange de poudre de sucre, de sucre inverti et d'amidon.

Quant à l'Alvéo-sucre®, il est obtenu par granulation humide d'un mélange de sucre et de maltodextrines.

L'un des aspects de la présente invention est de fournir un sucre avec des performances améliorées par rapport à celles des sucres de l'art antérieur, permettant d'obtenir des comprimés nécessitant des forces de compression et des forces d'éjection plus faibles que celles utilisées avec les comprimés obtenus à partir des sucres compressibles de l'art antérieur, tout en utilisant la même quantité de lubrifiant.

L'un des aspects de la présente invention est de fournir un sucre directement compressible, obtenu par un procédé de séchage par atomisation, ledit procédé étant effectué avec des appareils classiques d'atomisation et ne nécessitant donc pas une installation spécifique, contrairement au procédé d'obtention de certains sucres directement compressibles de l'art antérieur.

L'un des autres aspects de la présente invention est de fournir un sucre directement compressible, possédant des propriétés d'écoulement favorables à la compression.

L'un des autres aspects de la présente invention est de fournir un procédé de séchage d'une solution de saccharose qui permet de passer d'un état liquide à un état pulvérulent et sec, rendant le sucre prêt à l'emploi et qui permet de varier la distribution granulométrique des particules formant la composition de sucre, selon les conditions d'atomisation, et de contrôler la taille des cristaux obtenus, qui constituent les particules de la composition de sucre.

Selon son aspect le plus général, l'invention concerne une composition pulvérulente de sucre compressible, constituée de particules se présentant sous forme creuse.

L'invention concerne une composition pulvérulente de sucre compressible présentant une densité apparente supérieure à environ 0,5, et notamment comprise d'environ 0,6 à environ 0,8, et de préférence égale à environ 0,6, ladite composition étant constituée de particules se présentant sous forme creuse.

L'expression "composition pulvérulente de sucre" désigne des cristaux secs de sucre agglomérés en particules, elles-mêmes pouvant être agglomérées entre elles.

L'expression "compressible" désigne l'aptitude d'une poudre à donner des comprimés de taille, de forme et de poids régulier en sortie d'une comprimeuse.

Un sucre directement compressible est un sucre sous forme pulvérulente qui permet la fabrication de comprimés. Il est obtenu selon les étapes suivantes : la composition pulvérulente est mélangée avec les autres ingrédients (arômes, colorants, principes actifs, lubrifiants...) puis les comprimés sont produits en comprimant le mélange mentionné obtenu précédemment en trois phases (précompression - compression - éjection).

La composition pulvérulente de sucre obtenue selon l'invention est compressible, elle peut donc être utilisée pour la préparation de comprimés. Cependant, cette propriété de la composition de sucre ne limite en aucun cas son utilisation à la fabrication de comprimés.

L'expression "densité apparente" désigne la densité mesurée de la poudre ; il s'agit donc du rapport entre la masse de la poudre et le volume occupé par la poudre. Cette densité apparente s'oppose à la densité vraie de la poudre, qui correspond au rapport entre la masse de la poudre et le volume complètement rempli par ladite poudre sans volume d'air. On appelle degré de compactage d'une poudre le rapport entre la densité du comprimé et la densité vraie de la poudre.

Cette densité apparente peut être mesurée par la pesée d'un volume connu de poudre.

La composition de sucre selon l'invention présente une densité apparente supérieure à celle des sucres non compressibles de l'art antérieur, obtenus par séchage par atomisation, qui présentent une densité relativement faible, de l'ordre de 0,45.

Ceci permet de réduire la course des poinçons de la comprimeuse pendant la phase de compression et de diminuer la taille des alvéoles de la comprimeuse.

L'invention concerne une composition pulvérulente de sucre telle que définie ci-dessus, comprenant :

- du saccharose à raison d'environ 90% à environ 99% en poids, par rapport au poids total de la composition,
- au moins un agent anti-cristallisant à raison d'environ 1% à environ 10% en poids, par rapport au poids total de la composition,
- et éventuellement des additifs choisis parmi des arômes, des colorants ou des principes actifs.

L'agent anti-cristallisant est un liant qui permet de coller les cristaux de sucre entre eux. Il interfère avec le saccharose et ralentit la vitesse de cristallisation de celui-ci. Si la quantité d'agent anti-cristallisant est trop importante, le temps de séchage est plus important et la composition pulvérulente obtenue colle aux parois du dispositif de séchage.

L'agent anti-cristallisant présente en outre l'avantage d'augmenter la solubilité des composants de la solution de saccharose.

Dans la définition de l'agent anti-cristallisant, on exclut les édulcorants intenses tels que l'aspartame.

L'invention concerne une composition pulvérulente de sucre telle que définie ci-dessus, caractérisée en ce que l'agent anti-cristallisant est choisi parmi le sucre inverti, les maltodextrines, les monosaccharides, les oligosaccharides et les polyols.

Comme agents anti-cristallisants, on utilise principalement le sucre inverti et le raffinose, qui est un oligosaccharide, ces deux composés étant connus pour leur capacité à ralentir la vitesse de cristallisation du saccharose (Beet Sugar Technology, 3rd Edition, publié par Beet Sugar Development Foundation, 1982), ainsi que les maltodextrines.

L'invention concerne également une composition pulvérulente de sucre telle que définie ci-dessus, comprenant un agent lubrifiant choisi parmi des corps gras, tels que le stéarate de magnésium, l'acide stéarique, ou parmi les composés suivants : benzoate de sodium et silice colloïdale, à raison d'environ 0,1% à environ 1% par rapport au poids total de la composition.

L'agent lubrifiant sert à éviter le collage entre le comprimé obtenu après compression de la composition pulvérulente de sucre susmentionnée et les éléments de la comprimeuse utilisée pour fabriquer les comprimés. Il permet donc de réduire les frottements pendant la phase d'éjection du comprimé mais il a un impact négatif sur la cohésion, c'est-à-dire sur la dureté du comprimé.

On utilise un agent lubrifiant uniquement dans le cadre de la compression de la composition pulvérulente selon l'invention. L'ajout du lubrifiant permet au comprimé obtenu de mieux glisser : il est donc plus facile de le récupérer. Il est mélangé avec la composition pulvérulente selon l'invention mais n'est pas présent dans la solution initiale de saccharose. Ce composé est peu soluble dans la solution et s'il était présent dans la solution, il perturberait la formation de la poudre.

Selon un mode de réalisation avantageux de l'invention, la composition pulvérulente de sucre selon l'invention, telle que définie ci-dessus, est caractérisée en ce qu'elle est susceptible d'être comprimée,
la dureté de la poudre comprimée obtenue à partir de la composition pulvérulente étant supérieure à environ 2 MPa, ladite dureté étant mesurée pour une force de compression supérieure à environ 10 kN, et
la poudre comprimée répondant à une force d'éjection comprise d'environ 80 à environ 180 N, et de préférence égale à 150 N, ladite force d'éjection étant mesurée pour une force de compression comprise d'environ 15 à environ 20 kN.

Pour fixer les idées, la dureté peut être comprise d'environ 2 à environ 5 MPa. Dans ce qui précède et ce qui suit, la dureté correspond à la résistance.

La dureté des comprimés obtenus est mesurée selon la méthode décrite dans la pharmacopée européenne, chapitre 2.9.8 (1997).

Le mécanisme utilisé pour comprimer la composition de sucre selon l'invention est une comprimeuse constituée de deux poinçons, un poinçon inférieur et un poinçon supérieur, et la poudre est comprimée entre ces deux poinçons.

La force d'éjection est alors la force qu'il faut appliquer au poinçon inférieur pour libérer le comprimé.

Les valeurs mesurées avec les poudres de l'invention sont indiquées sur des courbes et comparées sur les mêmes courbes aux valeurs obtenues avec les poudres de l'art antérieur (voir figurés 6 à 9). La dureté de la poudre comprimée obtenue selon l'invention est mesurée selon le test normalisé mentionné ci-dessus et les forces d'éjection sont des valeurs enregistrées sur les poinçons inférieurs de la comprimeuse mentionnée ci-dessous.

On constate que les comprimés obtenus à partir de la composition pulvérulente selon l'invention présentent une dureté moyenne supérieure de 80% à celle des comprimés obtenus à partir de sucre directement compressible Dipac® et une force d'éjection inférieure de 50% à celle des comprimés obtenus à partir de sucre directement compressible Dipac®.

L'invention concerne également une composition pulvérulente de sucre telle que définie ci-dessus, caractérisée en ce qu'elle présente un taux d'humidité résiduelle égal ou inférieur à 1% en poids, par rapport au poids total de la composition.

Ce taux d'humidité résiduelle est mesuré par un dosage Karl Fischer.

Un taux d'humidité résiduelle, égal ou inférieur à 1%, correspond au taux d'humidité d'équilibre de la poudre obtenue dans les conditions atmosphériques normales (20-30°C, 50-60% d'hygrométrie relative).

Si le taux d'humidité résiduelle est supérieur à 1%, cette poudre plus humide est instable et a tendance à perdre de l'humidité pour atteindre son humidité d'équilibre.

L'invention concerne également une particule entrant dans la constitution de la composition de sucre telle que définie ci-dessus, caractérisée en ce qu'elle se présente sous forme creuse et dont la surface est constituée essentiellement d'un squelette formé de deux types de cristaux, ledit squelette étant composé d'un premier type de cristaux formant des interstices dans lesquels sont situés les cristaux constituant le deuxième type de cristaux, la taille des cristaux du premier type de cristaux étant notamment supérieure à environ 5 $\mu$m, et comprise notamment d'environ 10 à environ 30 $\mu$m, et la taille des cristaux du deuxième type de cristaux étant inférieure à 5 $\mu$m, et notamment inférieure à 1 $\mu$m, et avantageusement comprise d'environ 0,1 $\mu$m à environ 2 $\mu$m.

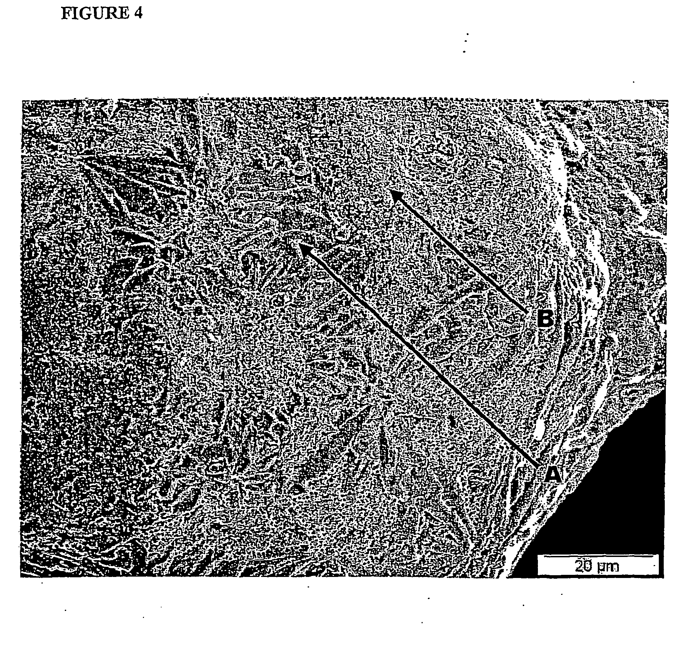

L'observation détaillée de la structure des particules de formes sphériques creuses entrant dans la composition de sucre selon l'invention montre que la structure fine desdites particules est constituée d'une ossature de cristaux de taille supérieure à environ 15 $\mu$m, environnée de cristaux beaucoup plus fins, de taille inférieure à environ 5 $\mu$m (voir figure 4).

La présence d'agent anti-cristallisant permet la formation de cette structure; et notamment la présence des cristaux de petite taille.

L'invention concerne également des granules constitués par des particules telles que définies ci-dessus, agglomérées entre elles, lesdits granules ayant une taille moyenne comprise d'environ 40 à environ 350 $\mu$m.

Lesdits granules sont donc constitués de particules qui forment la composition pulvérulente de sucre selon l'invention.

L'invention concerne également un procédé de préparation d'une composition de sucre compressible, comprenant une étape de séchage par atomisation d'une solution initiale de saccharose additionnée d'au moins un agent anti-cristallisant, dans lequel la solution initiale de saccharose a une teneur en saccharose inférieure au taux de saturation, et présente avantageusement un taux de matières sèches d'environ 60% en poids.

On désigne par taux de saturation de la solution le rapport entre la concentration en saccharose et la limite de solubilité du saccharose dans l'eau à la température considérée.

Lorsque le taux de saturation de la solution est égal à 1, la limite de solubilité du saccharose est atteinte ; lorsque cette valeur est supérieure à 1, la solution est dans un état métastable et la solution de saccharose est sursaturée.

Le taux de matières sèches d'un produit correspond au pourcentage d'extrait sec dudit produit. Pour les sirops de sucres, ce taux est généralement exprimé en degrés Brix, et correspond à la masse d'extrait sec en g pour 100 g de solution.

Selon un mode de réalisation avantageux de l'invention, le procédé, tel que défini ci-dessus, est caractérisé en ce que l'agent anti-cristallisant est choisi parmi les monosaccharides, les oligosaccharides et les polysaccharides, ou est un mélange de sucre inverti et de maltodextrines.

On peut citer comme monosaccharides le glucose et le fructose, comme oligosaccharides le maltose, le lactose, le raffinose, les malto-oligosaccharides et les fructo-oligosaccharides, et comme polysaccharides la gomme arabique, les glucanes, les galactomananes, les galactanes et les fructanes.

Selon un mode de réalisation avantageux de l'invention, le procédé, tel que défini ci-dessus, est caractérisé en ce qu'une partie de la composition de sucre obtenue est recyclée comme amorce de cristallisation, en quantité inférieure à environ 60% en poids, de préférence inférieure à environ 30%, par rapport au poids total de la composition.

L'expression "amorce de cristallisation" ou semences désigne les cristaux qui permettent la cristallisation du saccharose, par contact avec la poudre en cours de séchage, cette poudre étant plutôt amorphe. Cette amorce de cristallisation permet d'obtenir un solide sec et stable.

L'expression "une partie de la composition de sucre" désigne la fraction de poudre produite par séchage qui doit être recyclée pour le bon fonctionnement du séchage. Plus il y a de germes, plus la cristallisation est rapide par multiplication du nombre de cristaux induits.

Plus on recycle de poudre, plus le séchage des gouttelettes de la solution est rapide.

Selon un mode de réalisation avantageux de l'invention, le procédé, tel que défini ci-dessus, comporte les principales étapes suivantes :

- l'atomisation en gouttes fines d'une solution de saccharose, contenant au moins un agent anti-cristallisant, sous un flux de composition de sucre recyclée, ladite composition de sucre recyclée servant d'amorce de cristallisation,
- le séchage des gouttes ainsi obtenues par de l'air chaud, conduisant à l'obtention de particules creuses,
- la maturation des particules creuses obtenues à l'étape précédente, consistant en la poursuite du séchage, jusqu'à l'obtention d'une humidité résiduelle inférieure à 1% en poids, par rapport au poids total de la composition de sucre.

L'expression "solution de saccharose" désigne la solution initiale dans laquelle le saccharose représente de 90 à 99% des matières sèches.

Par "atomisation en gouttes fines", on désigne la transformation de la solution de saccharose en gouttelettes au moyen de buses ou de turbines.

L'étape de séchage consiste à sécher les gouttes formées par atomisation lors de l'étape précédente en particules solides avec un courant d'air chaud.

L'air chaud utilisé pour sécher les gouttes obtenues à l'étape correspondant à l'atomisation est à une température de 120 à 200°C. La température d'entrée de l'air chaud doit être fixée en fonction du débit de la solution de saccharose introduite. Plus le débit est élevé, plus la température doit être élevée en raison d'un plus fort besoin d'énergie thermique pour effectuer le séchage.

La température de sortie de la composition pulvérulente est d'environ 85°C.

Par "maturation", on désigne la poursuite du séchage jusqu'à l'obtention de l'humidité résiduelle se rapprochant de l'humidité d'équilibre dans les conditions de stockage normales du produit.

Si le taux d'humidité résiduelle est supérieur à 1%, le produit obtenu est un produit instable qui continue à perdre de l'eau, et cette eau peut se condenser sur n'importe quelle paroi plus froide. Ce phénomène entraîne en général un mottage.

Cette caractéristique est fondamentale car elle va conditionner l'aptitude de la poudre à rester pulvérulente et à conserver sa fluidité. Pour une poudre à compression directe, ce paramètre va influer directement sur la régularité en poids et en densité des comprimés. Ainsi, une poudre trop humide va augmenter très rapidement les forces d'éjection des comprimés et l'encrassement des équipements.

L'invention concerne également le procédé tel que défini ci-dessus, dans lequel on utilise un agent initial servant d'amorce de cristallisation, notamment le sucre glace.

Par "agent initial servant d'amorce de cristallisation", on désigne un composé qui sert à initier la cristallisation lors du séchage, tant que l'on ne dispose pas encore de poudre obtenue selon le procédé de l'invention.

Comme agent de cristallisation, on utilise notamment du sucre glace ou tout autre cristal de sucre très fin, composé de cristaux de taille inférieure à 200 μm.

L'invention concerne également le procédé tel que défini ci-dessus, dans lequel on supprime le sucre glace utilisé comme amorce de cristallisation, lorsqu'on a obtenu la composition de sucre en quantité suffisante pour être utilisée en partie comme amorce de cristallisation.

On se débarrasse généralement des compositions pulvérulentes de sucre contenant environ plus de 10% d'agent d'amorce de cristallisation, par exemple le sucre glace.

L'invention concerne également le procédé tel que défini ci-dessus, dans lequel on supprime l'utilisation du sucre glace lorsque la quantité de sucre obtenue est environ au moins égale à cinq fois la quantité de sucre glace initialement utilisé comme amorce de cristallisation.

L'invention concerne également une composition pulvérulente de sucre compressible telle qu'obtenue par le procédé tel que défini ci-dessus.

L'invention concerne également l'utilisation d'une composition pulvérulente de sucre compressible telle que définie ci-dessus, pour la préparation de comprimés ou de confiseries.

## DESCRIPTION DES FIGURES

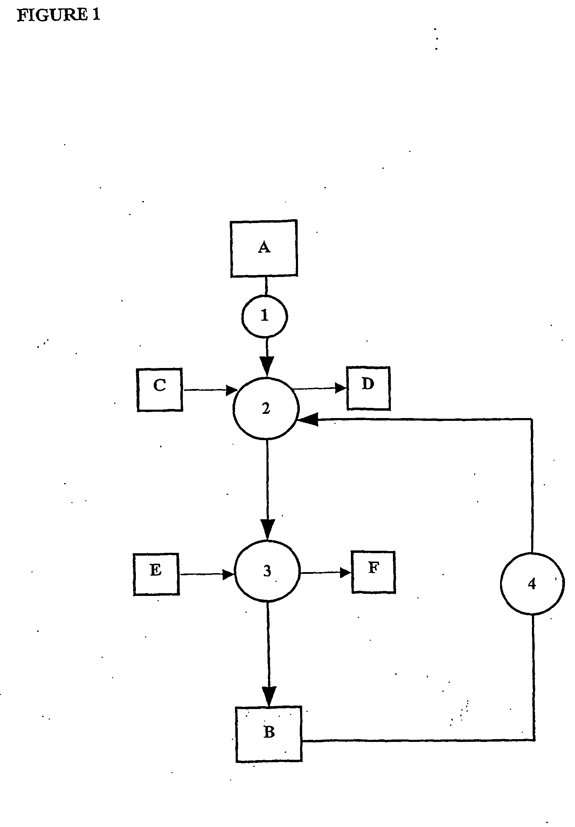

La **Figure 1** représente un schéma de principe du procédé selon l'invention. Le rectangle A correspond à la solution initiale, dont la température est comprise entre 50 et 90°C, comprenant du saccharose et au moins un agent anti-cristallisant, ladite solution initiale présentant un pourcentage en matières sèches compris entre 50 et 70%. Le rectangle B correspond au produit final, c'est-à-dire la poudre ou composition pulvérulente séchée, obtenue selon le procédé de la présente invention. Le cercle 1 correspond à l'étape d'atomisation du procédé selon la présente invention, le cercle 2 à l'étape de séchage, le cercle 3 à l'étape de maturation et le cercle 4 à l'étape de recyclage de la poudre comme amorce de cristallisation. Le rectangle C correspond à l'entrée de l'air utilisé lors de l'étape de séchage, à une température comprise entre 120 et 200°C et le rectangle D à la sortie de l'air après l'étape de séchage, à une température comprise entre 80 et 95°C. Le rectangle E correspond à l'entrée de l'air utilisé lors de l'étape de maturation, à une température comprise entre 40 et 60°C et le rectangle F à la sortie de l'air après cette étape de maturation, à une température comprise entre 35 et 60°C.

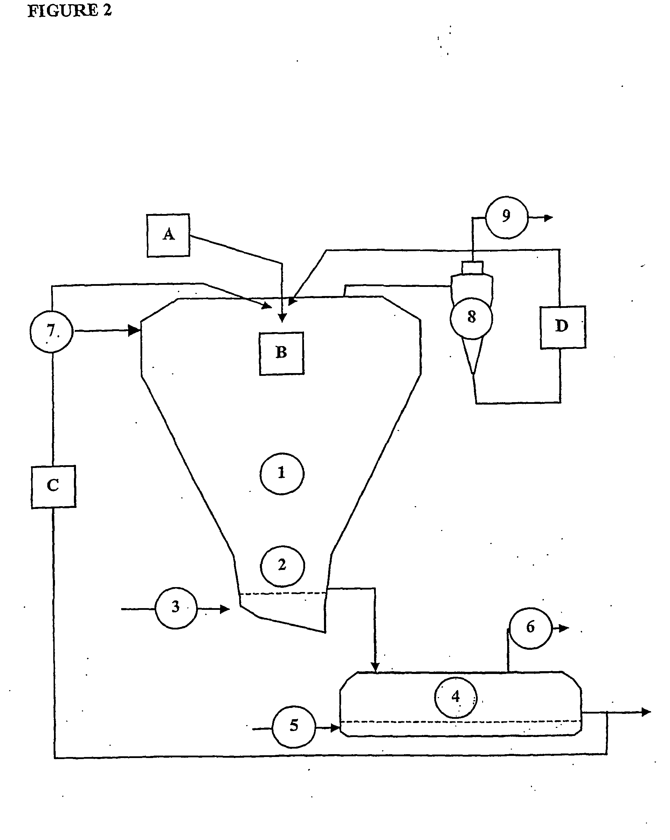

La **Figure 2** représente un schéma d'une tour de séchage MSD (sécheur à effets multiples).

Le rectangle A correspond à l'étape d'addition du mélange initial, comprenant du saccharose et au moins un agent anti-cristallisant, cette étape étant suivie par l'étape d'atomisation correspondant au rectangle B, et des étapes de recyclage de la poudre et de recyclage des particules fines, correspondant respectivement aux rectangles C et D. L'étape d'atomisation (rectangle B) a lieu dans la tour de séchage (cercle 1) et les particules obtenues sont récupérées dans le premier lit fluidisé (cercle 2), le cercle 3 représentant l'entrée de l'air utilisé dans ce premier lit fluidisé. Le produit sortant de ce premier lit fluidisé est maturé dans un second lit fluidisé (cercle 4), le cercle 5 correspondant à l'entrée de l'air dans ce deuxième lit fluidisé et le cercle 6 à sa sortie. Le cercle 7 représente l'entrée de l'air dans la tour de séchage (cercle 1). Les particules fines à recycler (rectangle D) sont récupérées dans le cyclone, correspondant au cercle 8, le cercle 9 correspondant à la sortie de l'air hors dudit cyclone.

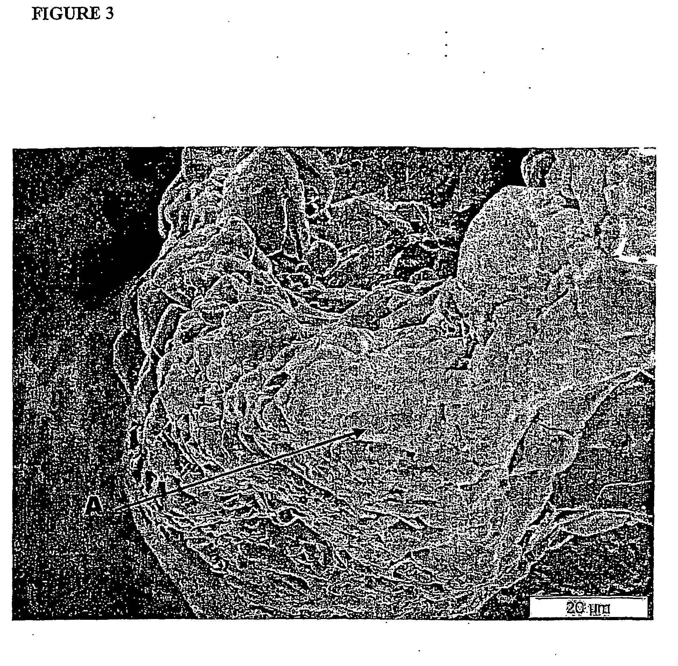

La **Figure 3** représente une image sous un microscope électronique à balayage d'une particule d'une composition pulvérulente de sucre obtenue par le procédé selon l'invention à partir de saccharose pur.

La flèche A représente de gros cristaux de taille supérieure à 5 $\mu$m.

La **Figure 4** représente une image sous un microscope électronique à balayage d'une particule d'une composition pulvérulente de sucre obtenue par le procédé selon l'invention à partir d'un mélange comprenant 95% de saccharose, 2,5% de sucre inverti et 2,5% de maltodextrines.

La flèche A représente de gros cristaux de taille supérieure à 5 $\mu$m et la flèche B indique des petits cristaux de taille inférieure à 5 $\mu$m.

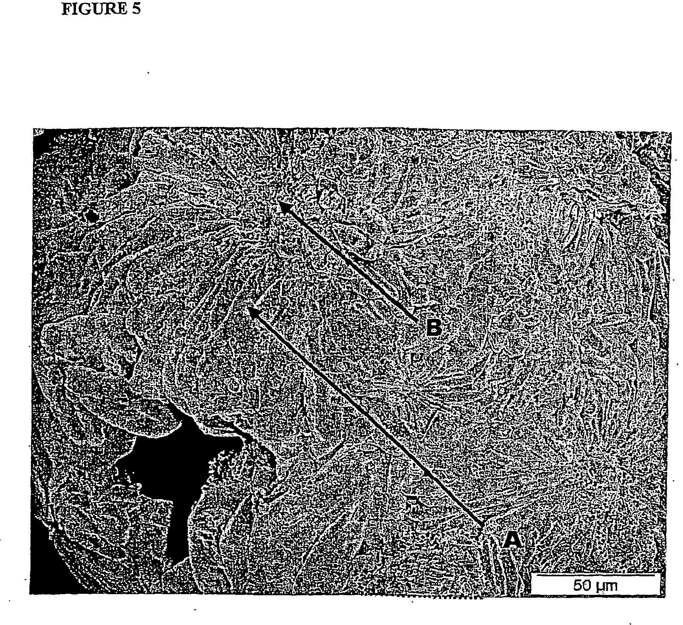

La Figure 5 représente une image sous un microscope électronique à balayage d'une particule d'une composition pulvérulente de sucre obtenue par le procédé selon l'invention à partir d'un mélange comprenant 95% de saccharose et 5% de sirop de glucose.

La flèche A représente de gros cristaux de taille supérieure à 5 $\mu$m et la flèche B indique des petits cristaux de taille inférieure à 5 $\mu$m.

Les Figures 6 à 9 présentent les caractéristiques de comprimés obtenus selon le mécanisme suivant :

Avant la phase de compression, les poudres sont mélangées à 0,5% ou 0,25% de stéarate de magnésium (agent lubrifiant) pendant trois minutes dans un mélangeur Gerike dans des conditions climatiques identique pour toutes les poudres.

On utilise une machine à comprimer Korsch de modèle PH103/DMS, qui comprend trois poinçons. La vitesse de rotation du carrousel portant les poinçons peut atteindre 80 tpm et les forces de compression peuvent atteindre 30 kN.

Cette machine comprend un système d'acquisition des forces de compression et d'éjection.

Pour des comprimés ronds, plats et de diamètre 11 mm, le protocole de compression est le suivant :

| Poudres fabriquées | Vitesse de rotation (tpm) | 40 |
|---|---|---|
| | Forces (kN) | 5 à 30 |

| Poudres de référence | Vitesse de rotation minimale (tpm) | 40 |
|---|---|---|
| | Vitesse de rotation maximale (tpm) | 80 |
| | Forces (kN) | 5 à 30 |

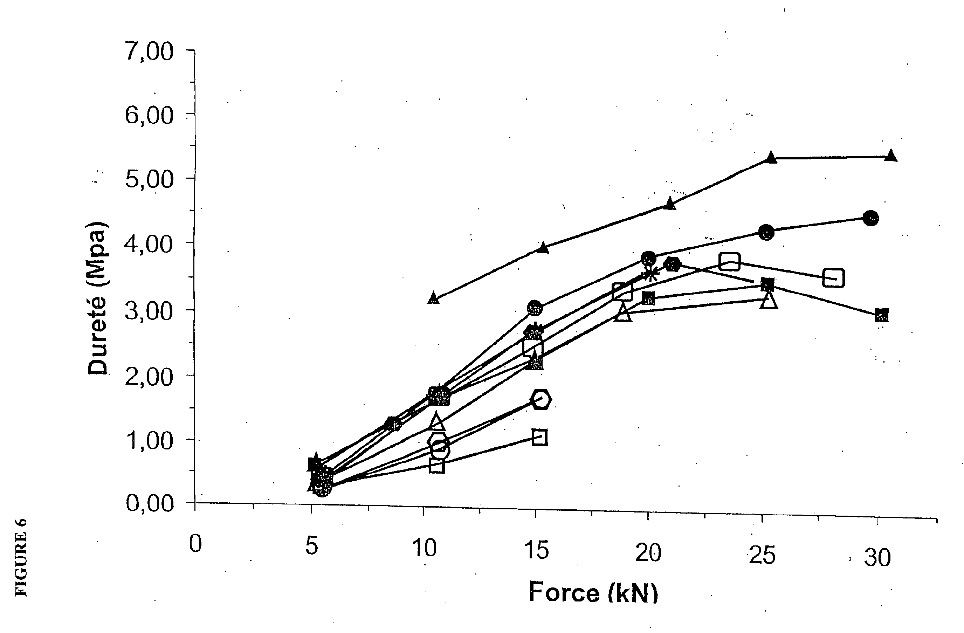

La Figure 6 représente des courbes comparatives de la dureté en MPa (ordonnées) des comprimés obtenus lors d'essais pilotes, à partir de différentes compositions de sucre, en fonction de la force de compression en kN (abscisses).

La courbe avec les carrés blancs correspond à des comprimés obtenus à partir d'un mélange à sec contenant 95% de saccharose et 5% de maltodextrines (le saccharose et les maltodextrines ayant été séchés séparément par atomisation avant d'être mélangés), la courbe avec les hexagones blancs correspond à des comprimés obtenus à partir d'un mélange à sec contenant 95% de saccharose et 5% de glucose et la courbe avec les ronds blancs correspond à des comprimés obtenus à partir d'un mélange à sec contenant 95% de saccharose et 5% de polyvinyl pyrolidone. La courbe avec les carrés noirs correspond à des comprimés obtenus à partir du sucre compressible Nutab® et la courbe avec les rectangles blancs à des comprimés obtenus à partir du sucre compressible Dipac®.

La courbe avec les triangles blancs correspond à des comprimés obtenus selon le procédé de l'invention à partir d'un mélange comprenant 95% de saccharose, 2,5% de maltodextrines et 2,5% de glucose. La courbe avec les ronds noirs correspond à des comprimés obtenus selon le procédé de l'invention, à partir d'un mélange comprenant 95% de saccharose et 5% de maltodextrines et la courbe avec les triangles noirs correspond à des comprimés obtenus selon le procédé de l'invention, à partir d'un mélange comprenant 95% de saccharose, 2,5% de maltodextrines et 2,5% de sucre inverti.

En comparant les différentes courbes de cette figure, on constate qu'en utilisant les mêmes compositions initiales, on obtient une poudre non compressible lorsque le mélange des différents constituants du mélange est effectué à sec, alors que lorsque le mélange est séché par atomisation, on obtient une poudre compressible.

En effet, on constate que les compositions obtenues à partir d'un mélange effectué à sec ne permettent pas d'obtenir des comprimés lorsque la force de compression est supérieure à 15 kN alors que, lorsque cette force est inférieure ou égale à 15 kN, la dureté des comprimés obtenus est très insuffisante (dé 0,5 à 1,5 MPa). Il en résulte donc que ces compositions ne constituent pas des poudres compressibles.

On constate également que la dureté des comprimés obtenus à partir des produits de l'art antérieur atteint un plafond lorsque la force de compression augmente et diminue pour les forces de compression les plus élevées, tandis que les comprimés obtenus selon le procédé de la présente invention présentent les duretés les plus élevées.

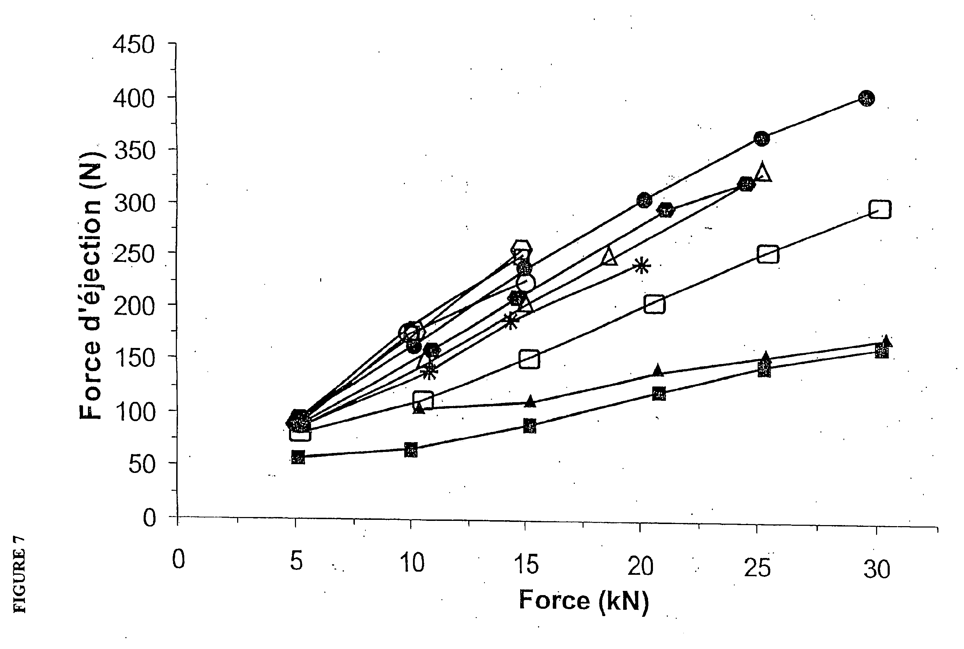

La **Figure 7** représente des courbes comparatives de la force d'éjection en N (ordonnées) à laquelle répondent des comprimés obtenus lors d'essais pilotes, à partir de différentes compositions de sucre, en fonction de la force de compression en kN (abscisses).

La courbe avec les carrés blancs correspond à des comprimés obtenus à partir d'un mélange à sec de 95% de saccharose et de 5% de maltodextrines (le saccharose et les maltodextrines ayant été séchés séparément par atomisation avant d'être mélangés), la courbe avec les hexagones blancs correspond à des comprimés obtenus à partir d'un mélange à sec de 95% de saccharose et de 5% de glucose et la courbe avec les ronds blancs correspond à des comprimés obtenus à partir d'un mélange à sec de 95% de saccharose et de 5% de polyvinyl pyrolidone. La courbe avec les carrés noirs correspond à des comprimés obtenus à partir du sucre compressible Nutab® et la courbe avec les rectangles blancs à des comprimés obtenus à partir du sucre compressible Dipac®.

La courbe avec les triangles blancs correspond à des comprimés obtenus selon le procédé de l'invention à partir d'un mélange comprenant 95% de.saccharose, 2,5% de maltodextrines et 2,5% de glucose. La courbe avec les ronds noirs correspond à des comprimés obtenus selon le procédé de l'invention, à partir d'un mélange comprenant 95% de saccharose et 5% de maltodextrines et la courbe avec les triangles noirs correspond à des comprimés obtenus selon le procédé de l'invention, à partir d'un mélange comprenant 95% de saccharose, 2,5% de maltodextrines et 2,5% de sucre inverti. La courbe avec les étoiles noires correspond à des comprimés obtenus selon le procédé de l'invention, à partir d'un mélange comprenant 95% de saccharose, 2,5% de maltodextrines et 2,5% de polyvinyl pyrolidone. La courbe avec les hexagones noirs correspond à des comprimés obtenus selon le procédé de l'invention, à partir d'un mélange comprenant 95% de saccharose et 5% de glucose.

Les courbes de la Figure 7 sont à analyser en parallèle avec les courbes de la Figure 6. En effet, la force d'éjection et la dureté ne peuvent être dissociées. Plus précisément, une dureté faible n'est pas compatible avec une force d'éjection élevée car les comprimés risqueraient de se briser lors de leur éjection. En revanche, des comprimés à forte dureté peuvent supporter une force d'éjection plus importante. Ainsi, les comprimés obtenus selon le procédé de l'invention présentent un meilleur couple : dureté - force d'éjection, que les comprimés de l'art antérieur.

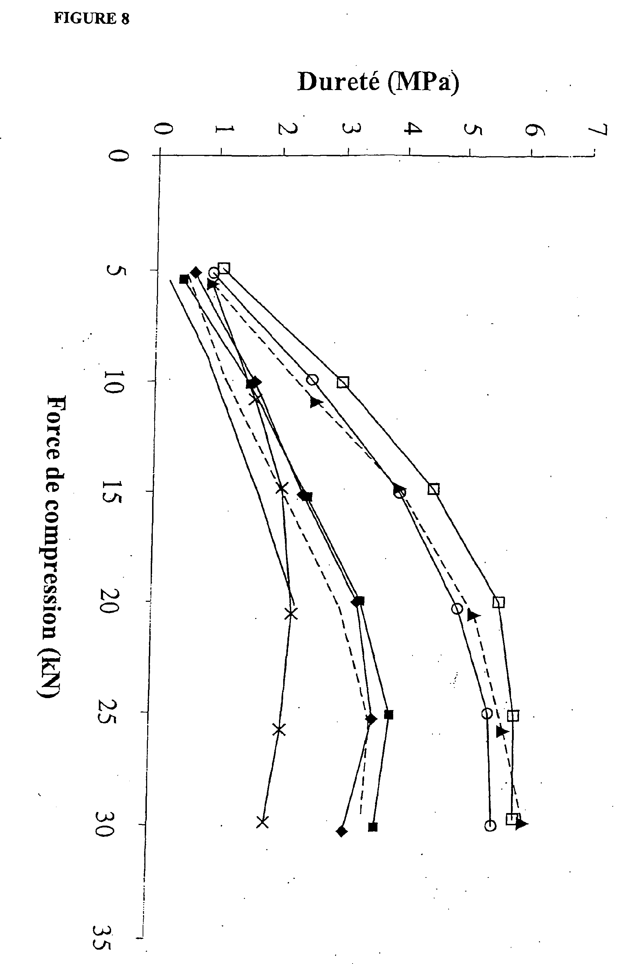

La **Figure 8** représente des courbes comparatives de la dureté en MPa (ordonnées) des comprimés obtenus lors d'essais à échelle industrielle, à partir de différentes compositions de sucre, en fonction de la force de compression en kN (abscisses).

La courbe en trait plein avec les croix noires correspond aux comprimés obtenus selon le procédé décrit dans le brevet GB 1,350,098. La courbe en trait plein correspond aux comprimés obtenus à partir de saccharose pur. La courbe en trait plein avec des losanges noirs correspond aux comprimés obtenus à partir de sucre Nutab®, la courbe en pointillés aux comprimés obtenus à partir de sucre Microtal (produit commercial ; version européenne du sucre Dipac®) et la courbe en trait plein avec les carrés noirs aux comprimés obtenus à partir de sucre Dipac®.

La courbe en trait plein avec les ronds blancs correspond aux comprimés obtenus selon le procédé de l'invention, à partir du mélange comprenant 95% de saccharose, 2,27% de maltodextrines, 1,82% de sucre inverti et 0,9% de caramel, la courbe en pointillés avec les triangles noirs aux comprimés obtenus selon le procédé de l'invention, à partir du mélange comprenant 95% de saccharose, 2,5% de maltodextrines, 2,5% de sucre inverti et 0,014% de colorant et la courbe en trait plein avec les carrés blancs aux comprimés obtenus selon le procédé de l'invention, à partir du mélange comprenant 95% de saccharose, 2,5% de maltodextrines et 2,5% de sucre inverti.

Les poudres obtenues selon le procédé de l'invention sont plus performantes que celles obtenues à partir des produits du marché. En effet, la dureté des comprimés obtenus à partir des sucres compressibles du marché atteint un maximum compris entre 3,4 et 3,8 MPa pour une force de compression très élevée (25 kN) alors que les comprimés obtenus selon le procédé de l'invention présentent des duretés plus importantes (de 4,9 à 5,7 MPa) pour une force de compression moindre (20 kN seulement).

On constate également que les produits obtenus à partir de saccharose pur ou selon le brevet GB 1,350,098 ne sont pas des poudres compressibles. En effet, la dureté de ces comprimés est beaucoup trop faible (inférieure à 2,5 MPa) pour que les poudres de départ puissent être qualifiées de poudres compressibles.

Afin de limiter l'usure des pièces de la machine à comprimer et de réduire la force qu'il est nécessaire d'appliquer aux comprimés pour leur éjection, il est souhaitable d'utiliser une force de compression modérée. Ainsi, pour la force de compression de 15 kN, les courbes de la Figure 8 montrent que la dureté des comprimés obtenus selon le procédé de l'invention est le double de celle des comprimés obtenus à partir des produits de l'art antérieur (de 4 à 4,7 MPa contre 2 à 2,3 MPa). Cela illustre donc la performance très améliorée des compositions de sucre de l'invention par rapport à leur aptitude à la compression.

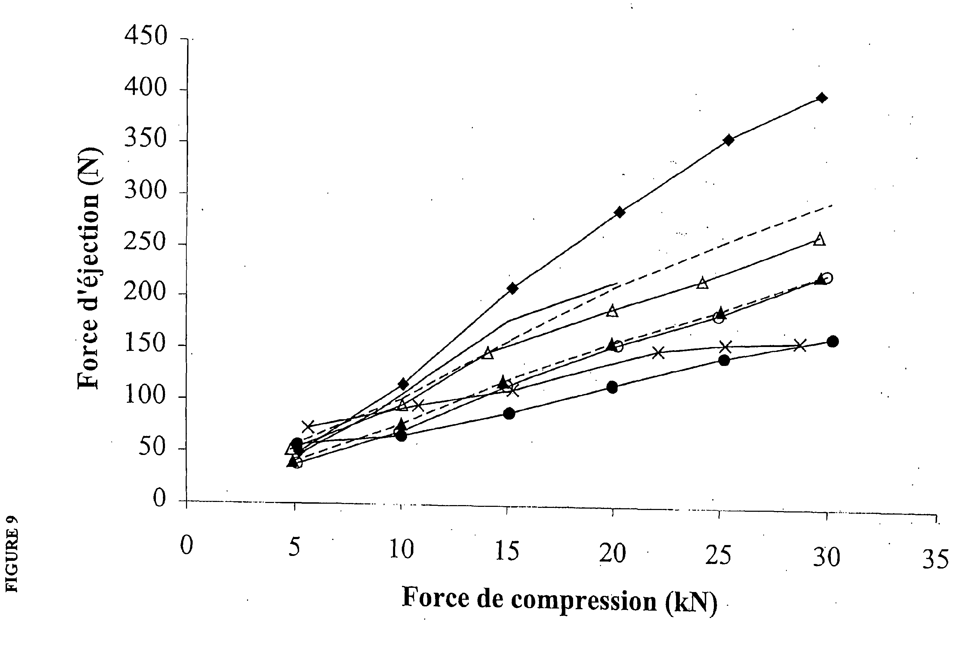

La **Figure 9** représente des courbes comparatives de la force d'éjection en N (ordonnées) à laquelle répondent des comprimés obtenus lors d'essais à échelle industrielle, à partir de différentes compositions de sucre, en fonction de la force de compression en kN (abscisses).

La courbe en trait plein avec les croix noires correspond aux comprimés obtenus selon le procédé décrit dans le brevet GB 1,350,098. La courbe en trait plein correspond aux comprimés obtenus à partir de saccharose pur. La courbe en trait plein avec les ronds noirs correspond aux comprimés obtenus à partir de sucre Nutab®, la courbe en trait plein avec les losanges noirs aux comprimés obtenus à partir de sucre Microtal et la courbe en pointillés aux comprimés obtenus à partir de sucre Dipac®.

La courbe en trait plein avec les ronds blancs correspond aux comprimés obtenus selon le procédé de l'invention, à partir du mélange comprenant 95% de saccharose, 2,27% de maltodextrines, 1,82% de sucre inverti et 0,9% de caramel, la courbe en trait plein avec les triangles blancs aux comprimés obtenus selon le procédé de l'invention, à partir du mélange comprenant 95% de saccharose, 2,5% de maltodextrines, 2,5% de sucre inverti et 0,014% de colorant et la courbe en pointillés avec les triangles noirs aux comprimés obtenus selon le procédé de l'invention, à partir du mélange comprenant 95% de saccharose, 2,5% de maltodextrines et 2,5% de sucre inverti.

Il faut associer les Figures 8 et 9 afin de considérer le couple : dureté - force d'éjection des comprimés. Les comprimés obtenus selon le procédé de l'invention nécessitent des forces d'éjection modérées (voir Figure 9) tandis que leurs duretés (voir Figure 8) sont très élevées. Il n'en est pas de même des comprimés obtenus à partir des produits de l'art antérieur qui nécessitent des forces d'éjection modérées à très élevées, pour des duretés sensiblement inférieures.

**Exemple 1**

L'équipement utilisé (voir Figure 2) est une tour de séchage par atomisation à effets multiples (MSD) qui permet de recycler les particules fines vers la zone d'atomisation. Les gouttes formées par atomisation sont séchées dans une chambre par de l'air chaud et la composition pulvérulente ou poudre ainsi obtenue est maintenue dans un lit fluidisé situé au bas de l'installation. Le produit sortant du lit fluidisé est maturé dans un second lit fluidisé. Cette étape permet l'évacuation de l'humidité dégagée naturellement par la poudre, jusqu' à une humidité résiduelle de moins de 1 %.

Une solution de saccharose, de sucre inverti et de maltodextrines ayant l'une des compositions indiquées ci-après est séchée par atomisation au moyen d'une buse haute pression. La température d'entrée de l'air est ajustée pour une température de sortie de 85 à 90°C. La température de l'air d'entrée du premier lit fluidisé est ajustée pour maintenir la poudre à une température de 40°C. La phase de maturation est conduite avec de l'air sec et permet de ramener l'humidité résiduelle de la poudre de quelques % à des valeurs inférieures à 1%.

Le séchage est réalisé dans les conditions suivantes :

- Recyclage des particules fines : vers la zone d'atomisation
- Recyclage de la poudre avec un doseur à vis : quantité 20% en poids par rapport à la matière sèche de la solution entrant
- Buse d'atomisation : haute pression (150 -300 bars)
- Débit de la poudre : environ 300 kg/heure
- Débit de la solution de départ (sirop) : 400 L/heure
- Température de la solution : 60°C, 60% d'extrait sec
- Température d'entrée de l'air chaud : 145°C
- Composition des solutions (les chiffres indiqués sont des pourcentages en poids par rapport au poids total de la composition) :

  * Saccharose / sucre inverti / maltodextrines (95 / 2,5 / 2,5)
  * Saccharose / sucre inverti / maltodextrines / colorant (95 / 2,5 / 2,5 / 0,014)
  * Saccharose / sucre inverti / maltodextrines / caramel (95 / 2,27 / 1,82 / 0,9)

- Température de sortie de la tour : 85 - 90°C

Les caractéristiques des poudres fabriquées selon cet exemple 1 sont données ci-dessous dans le tableau 1.

**Tableau 1**

| Produit | Humidité (%) | Granulométrie moyenne ($\mu$m) | Coulabilité (secondes pour 100 g) | Densité non tassée (g/cm$^3$) | Densité tassée (g/cm$^3$) | Indice de Carr (%) |
|---|---|---|---|---|---|---|
| Saccharose pur | 0,74 | 285 | 13,6 | 0,45 | 0,64 | 30 |
| S + mdx + SI + colorant | 0,90 | 358 | 11,2 | 0,55 | 0,63 | 13 |
| S + mdx + SI + caramel | 0,84 | 306 | 10,5 | 0,55 | 0,64 | 14 |
| S + mdx + SI | 0,90 | 380 | 10,5 | 0,58 | 0,64 | 9 |

La ligne "S + mdx + SI + colorant" correspond à un mélange comprenant 95% de saccharose, 2,5% de maltodextrines, 2,5% de sucre inverti et 0,014% de colorant.

La ligne "S + mdx + SI + caramel" correspond à un mélange comprenant 95% de saccharose, 2,27% de maltodextrines, 1,82% de sucre inverti et 0,9% de caramel.

La ligne "S + mdx + SI" correspond à un mélange comprenant 95% de saccharose, 2,57% de maltodextrines et 2,5% de sucre inverti.

L'indice de Carr permet de définir la coulabilité d'une poudre et correspond au rapport suivant :

$$\text{Indice de Carr} = 100 \times \frac{\text{densité tassée} - \text{densité non tassée}}{\text{densité tassée}}$$

EP 1 399 596 B1

L'aptitude à l'écoulement est directement corrélée à l'indice de Carr selon le tableau suivant :

| Indice de Carr | Aptitude à l'écoulement |
|---|---|
| 5 à 11% | Excellente |
| 12 à 17% | Bonne |
| 18 à 22% | Moyenne |
| 23 à 28% | Passable |
| 29 à 34% | Mauvaise |
| 35 à 40% | Très mauvaise |
| supérieur à 40% | Très, très mauvaise |

**Exemple 2**

L'équipement utilisé est une tour de séchage par atomisation à effets multiples (MSD) qui permet de recycler les particules fines vers la zone d'atomisation. Son principe de fonctionnement est identique à l'installation citée dans l'exemple précédent.

La solution de départ ayant l'une des compositions indiquées ci-après est atomisée avec une buse bifluide. Les particules fines sont recyclées vers le lit fluidisé. Une partie de la poudre produite (20%) est recyclée au moyen d'un doseur vers la buse d'atomisation. Le produit ainsi séché est maturé soit dans un lit fluidisé, soit dans un sécheur tambour.

Le séchage est réalisé selon les conditions suivantes :

- Recyclage des particules fines : vers le lit fluidisé (cercle 2 sur la figure 2)
- Recyclage de la poudre avec un doseur : 20% en poids vers la buse
- Buse d'atomisation : bifluide
- Débit poudre : environ 7 kg/heure
- Débit de la solution de départ (sirop) : 10 L/heure
- Température de la solution: 60°C, 60% d'extrait sec
- Température d'entrée de l'air chaud : 170°C
- Composition des solutions (les chiffres indiqués sont des pourcentages en poids par rapport au poids total de la composition) :

  * Saccharose / sirops de glucose (95 / 5)
  * Saccharose / maltodextrines (95 / 5)
  * Saccharose / sucre inverti / maltodextrines (95 / 2,5 / 2,5)
  * Saccharose / sucre inverti / maltodextrines / colorant (95 / 2,5 / 2,5 / 0,014)
  * Saccharose / sucre inverti / maltodextrines / caramel (95 / 2,27 / 1,82 / 0,9)

- Température sortie tour : 85 - 90°C

**Revendications**

1. Composition pulvérulente de sucre compressible présentant une densité apparente supérieure à 0,5, et notamment comprise de 0,6 à 0,8, et de préférence égale à 0,6, ladite composition étant constituée de particules se présentant sous forme creuse.

2. Composition pulvérulente de sucre selon la revendication 1, comprenant :

   - du saccharose à raison de 90% à 99% en poids, par rapport au poids total de la composition,
   - au moins un agent anti-cristallisant à raison de 1% à 10% en poids, par rapport au poids total de la composition,
   - et éventuellement des additifs choisis parmi des arômes, des colorants ou des principes actifs.

3. Composition pulvérulente de sucre selon la revendication 2, **caractérisée en ce que** l'agent anti-cristallisant est choisi parmi le sucre inverti, les maltodextrines, les monosaccharides, les oligosaccharides et les polyols.

4. Composition pulvérulente de sucre selon la revendication 1, comprenant un agent lubrifiant choisi parmi des corps gras, tels que le stéarate de magnésium, l'acide stéarique, ou parmi les composés suivants : benzoate de sodium et silice colloïdale, à raison de 0,1% à 1% par rapport au poids total de la composition.

5. Composition pulvérulente de sucre selon l'une des revendications 1 à 4, **caractérisée en ce qu'**elle est susceptible d'être comprimée,
la dureté de la poudre comprimée obtenue à partir de la composition pulvérulente étant supérieure à 2 MPa, ladite dureté étant mesurée pour une force de compression supérieure à 10 kN, et
la poudre comprimée répondant à une force d'éjection comprise de 80 à 180 N, et de préférence égale à 150 N, ladite force d'éjection étant mesurée pour une force de compression comprise de 15 à 20 kN.

6. Composition pulvérulente de sucre selon l'une des revendications 1 à 5, **caractérisée en ce qu'**elle présente un taux d'humidité résiduelle égal ou inférieur à 1% en poids, par rapport au poids total de la composition.

7. Particule entrant dans la constitution de la composition de sucre selon l'une des revendications 1 à 6, **caractérisée en ce qu'**elle se présente sous forme creuse et dont la surface est constituée essentiellement d'un squelette formé de deux types de cristaux, ledit squelette étant composé d'un premier type de cristaux formant des interstices dans lesquels sont situés les cristaux constituant le deuxième type de cristaux, la taille des cristaux du premier type de cristaux étant notamment supérieure à 5 $\mu$m, et comprise notamment de 10 à 30 $\mu$m, et la taille des cristaux du deuxième type de cristaux étant inférieure à 5 $\mu$m, et notamment inférieure à 1 $\mu$m, et avantageusement comprise de 0,1 $\mu$m à 2 $\mu$m.

8. Granules constitués par des particules selon la revendication 7 agglomérées entre elles, lesdits granules ayant une taille moyenne comprise de 40 à 350 $\mu$m.

9. Procédé de préparation d'une composition de sucre compressible, comprenant une étape de séchage par atomisation d'une solution initiale de saccharose additionnée d'au moins un agent anti-cristallisant, dans lequel la solution initiale de saccharose a une teneur en saccharose inférieure au taux de saturation, et présente avantageusement un taux de matières sèches d'environ 60% en poids.

10. Procédé selon la revendication 9, **caractérisé en ce que** l'agent anti-cristallisant est choisi parmi les monosaccharides, les oligosaccharides et les polysaccharides, ou est un mélange de sucre inverti et de maltodextrines.

11. Procédé selon la revendication 9 ou 10, **caractérisé en ce qu'**une partie de la composition de sucre obtenue est recyclée comme amorce de cristallisation, en quantité inférieure à 60% en poids, de préférence inférieure à 30%, par rapport au poids total de la composition.

12. Procédé selon l'une des revendications 9 à 11, comportant les principales étapes suivantes :

- l'atomisation en gouttes fines d'une solution de saccharose, contenant au moins un agent anti-cristallisant, sous un flux de composition de sucre recyclée, ladite composition de sucre recyclée servant d'amorce de cristallisation,
- le séchage des gouttes ainsi obtenues par de l'air chaud, conduisant à l'obtention de particules creuses,
- la maturation des particules creuses obtenues à l'étape précédente, consistant en la poursuite du séchage, jusqu'à l'obtention d'une humidité résiduelle inférieure à 1% en poids, par rapport au poids total de la composition de sucre.

13. Procédé selon la revendication 12, dans lequel on utilise un agent initial servant d'amorce de cristallisation, notamment le sucre glace.

14. Procédé selon la revendication 13, dans lequel on supprime le sucre glace utilisé comme amorce de cristallisation, lorsqu'on a obtenu la composition de sucre en quantité suffisante pour être utilisée en partie comme amorce de cristallisation.

15. Procédé selon la revendication 13, dans lequel on supprime l'utilisation du sucre glace lorsque la quantité de sucre obtenue est environ au moins égale à cinq fois la quantité de sucre glace initialement utilisé comme amorce de cristallisation.

16. Composition pulvérulente de sucre compressible telle qu'obtenue par le procédé selon l'une des revendications 9 à 15.

17. Utilisation d'une composition pulvérulente de sucre compressible selon l'une des revendications 1 à 6 ou 16, pour la préparation de comprimés ou de confiseries.

**Claims**

1. Compressible powdery sugar composition having an apparent density greater than 0.5, and in particular comprised from 0.6 to 0.8, and preferably equal to 0.6, said composition being made up of particles being presented in hollow form.

2. Powdery sugar composition according to claim 1, comprising:

   - sucrose amounting to 90% to 99% by weight, with respect to the total weight of the composition,
   - at least one anti-crystallizing agent amounting to 1% to 10% by weight, with respect to the total weight of the composition,
   - and optionally additives chosen from flavourings, colorants or active ingredients.

3. Powdery sugar composition according to claim 2, **characterized in that** the anti-crystallizing agent is chosen from inverted sugar, the maltodextrins, monosaccharides, oligosaccharides and polyols.

4. Powdery sugar composition according to claim 1, comprising a lubricant chosen from fatty substances, such as magnesium stearate, stearic acid, or from the following compounds: sodium benzoate and colloidal silica, amounting to 0.1% to 1% with respect to the total weight of the composition.

5. Powdery sugar composition according to one of claims 1 to 4, **characterized in that** it can be compressed, the hardness of the compressed powder obtained from the powdery composition being greater than 2 MPa, said hardness being measured for a compression force greater than 10 kN, and the compressed powder responding to an ejection force comprised from 80 to 180 N, and preferably equal to 150 N, said ejection force being measured for a compression force comprised from 15 to 20 kN.

6. Powdery sugar composition according to one of claims 1 to 5, **characterized in that** it has a residual humidity level equal to or lower than 1% by weight, with respect to the total weight of the composition.

7. Particle forming part of the constitution of the sugar composition according to one of claims 1 to 6, **characterized in that** it is presented in hollow form and the surface of which is essentially made up of a skeleton formed by two types of crystals, said skeleton being made up of a first type of crystals forming interstices in which are situated the crystals making up the second type of crystals, the crystal size of the first type of crystals being in particular greater than 5 $\mu$m, and comprised in particular from 10 to 30 $\mu$m, and the crystal size of the second type of crystals being lower than 5 $\mu$m, and in particular lower than 1 $\mu$m, and advantageously comprised from 0.1 $\mu$m to 2 $\mu$m.

8. Granules made up of particles according to claim 7 agglomerated between themselves, said granules having an average size comprised from 40 to 350 $\mu$m.

9. Process for the preparation of a compressible sugar composition, comprising a stage of spray-drying of an initial sucrose solution to which at least one anti-crystallizing agent has been added, in which the initial sucrose solution has a sucrose content lower than the saturation level, and advantageously has a dry matter content of approximately 60% by weight.

10. Process according to claim 9, **characterized in that** the anti-crystallizing agent is chosen from the monosaccharides, oligosaccharides and polysaccharides, or is a mixture of inverted sugar and maltodextrins.

11. Process according to claim 9 or 10, **characterized in that** part of the sugar composition obtained is recycled as crystallization primer, in a quantity lower than 60% by weight, preferably lower than 30%, with respect to the total weight of the composition.

12. Process according to one of the claims 9 to 11, comprising the following main stages:

- the atomization into fine drops of a sucrose solution, containing at least one anti-crystallizing agent, under a flow of recycled sugar composition, said recycled sugar composition serving as crystallization primer,
- the drying of the drops thus obtained by hot air, leading to the production of hollow particles,
- the maturation of the hollow particles obtained in the previous stage, consisting of the continuation of the drying, until a residual humidity lower than 1% by weight is obtained, with respect to the total weight of the sugar composition.

13. Process according to claim 12, in which an initial agent serving as crystallization primer is used, in particular icing sugar.

14. Process according to claim 13, in which icing sugar is not used as crystallization primer, when the sugar composition has been obtained in a sufficient quantity to be used in part as crystallization primer.

15. Process according to claim 13, in which icing sugar is not used when the quantity of sugar obtained is approximately at least equal to five times the quantity of icing sugar initially used as crystallization primer.

16. Compressible powdery sugar composition as obtained by the process according to one of claims 9 to 15.

17. Use of a compressible powdery sugar composition according to one of claims 1 to 6 or 16, for the preparation of tablets or confectionery.


**Patentansprüche**

1. Pulverförmige Zusammensetzung von komprimierbarem Zucker, die eine Schüttdichte über 0,5 und insbesondere von 0,6 bis 0,8 und vorzugsweise von gleich 0,6 hat, wobei diese Zusammensetzung aus Teilchen gebildet wird, die eine hohle Form aufweisen.

2. Pulverförmige Zusammensetzung von Zucker gemäß Anspruch 1, enthaltend:

- Saccherose in einer Menge von 90 bis 99 Gew.% in Bezug auf das Gesamtgewicht der Zusammensetzung,
- mindestens ein kristallisationshemmendes Mittel in der Menge von 1 bis 10 Gew.% in Bezug auf das Gesamtgewicht der Zusammensetzung,
- und gegebenenfalls Zusatzstoffe, die aus Aromen, Farbstoffen oder Wirkstoffen ausgewählt sind.

3. Pulverförmige Zusammensetzung von Zucker gemäß Anspruch 2, **dadurch gekennzeichnet, dass** das kristallisationshemmende Mittel aus dem Invertzucker, den Maltodextrinen, den Monosacchariden, den Oligosacchariden und den Polyalkoholen ausgewählt ist.

4. Pulverförmige Zusammensetzung von Zucker gemäß Anspruch 1, mit einem Schmiermittel, das aus Fetten wie dem Magnesiumstearat, der Stearinsäure oder aus den folgenden Verbindungen ausgewählt ist: Natriumbenzoat und kolloidale Kieselsäure in einer Menge von 0,1 bis 1 Gew.% in Bezug auf das Gesamtgewicht der Zusammensetzung.

5. Pulverförmige Zusammensetzung von Zucker gemäß einem der Ansprüche 1 bis 4, **dadurch gekennzeichnet, dass** sie geeignet ist komprimiert zu werden,
wobei die Härte des komprimierten Pulvers, das ausgehend von der pulverförmigen Zusammensetzung erhalten wird, über 2 MPa ist, wobei diese Härte für eine Kompressionskraft über 10 kN gemessen ist, und
wobei das komprimierte Pulver auf eine Ejektionskraft anspricht, die von 80 bis 180 N liegt, und vorzugsweise gleich 150 N ist, wobei diese Ejektionskraft für eine Kompressionskraft von 15 bis 20 kN gemessen ist.

6. Pulverförmige Zusammensetzung von Zucker gemäß einem der Ansprüche 1 bis 5, **dadurch gekennzeichnet, dass** sie einen Restfeuchtigkeitsgehalt von gleich oder unter 1 Gew.% in Bezug auf das Gesamtgewicht der Zusammensetzung enthält.

**7.** Teilchen, das Teil des Gefüges der Zusammensetzung des Zuckers gemäß einem der Ansprüche 1 bis 6 ist, **dadurch gekennzeichnet, dass** es in hohler Form vorliegt und dessen Oberfläche im wesentlichen aus einem Skelett aufgebaut ist, das aus zwei Kristallarten gebildet wird, wobei das Skelett aus einer ersten Kristallart zusammengesetzt wird, die Lücken bildet, in welchen die Kristalle angeordnet sind, die die zweite Kristallart bilden, wobei die Größe der Kristalle der ersten Kristallart insbesondere größer als 5$\mu$m ist, und insbesondere von 10 bis 30 $\mu$m, und die Größe der Kristalle der zweiten Kristallart kleiner als 5 $\mu$m und insbesondere kleiner als 1 $\mu$m und vorteilhafterweise von 0,1 $\mu$m bis 2 $\mu$m ist.

**8.** Körnchen, die durch die Teilchen gemäß Anspruch 7 gebildet sind, welche unter einander agglomeriert sind, wobei die Körnchen eine mittlere Größe von 40 bis 350 $\mu$m haben.

**9.** Verfahren zur Herstellung einer Zusammensetzung von komprimierbarem Zucker, enthaltend einen Trocknungsschritt durch Zerstäubung einer Ausgangssaccheroselösung, die zumindest mit einem kristallisationshemmenden Mittel versetzt ist, bei welchem die Ausgangssaccheroselösung einen Saccherose-gehalt unter dem Sättigungsgrad und vorteilhafterweise einen Trockensubstanz-gehalt von ungefähr 60 Gew.% hat.

**10.** Verfahren nach Anspruch 9, **dadurch gekennzeichnet, dass** das kristallisationshemmende Mittel aus den Monosacchariden, den Oligosacchariden und den Polysacchariden oder einer Mischung von Invertzucker und Maltodextrinen ausgewählt ist.

**11.** Verfahren gemäß Anspruch 9 oder 10, **dadurch gekennzeichnet, dass** ein Teil der erhaltenen Zuckerzusammensetzung als Kristallisationskern in einer Menge unterhalb von 60 Gew.%, vorzugsweise unter 30 Gew.%, in Bezug auf das Gesamtgewicht der Zusammensetzung, zurückgeführt wird.

**12.** Verfahren gemäß einem der Ansprüche 9 bis 11, das die folgenden Hauptschritte enthält:

- die Zerstäubung einer Saccheroselösung, die zumindest ein kristallisationshemmendes Mittel enthält, in feine Tröpfchen unter einem Fluss einer zurückgeführten Zuckerzusammensetzung, wobei die zurückgeführte Zuk-kerzusammensetzung als Kristallisationskern dient,
- das Trocknen der so erhaltenen Tröpfchen durch heiße Luft, was zum Erhalt von hohlen Teilchen führt,
- die Reifung der im vorhergehenden Schritt erhaltenen hohlen Teilchen bestehend in der Fortsetzung der Trocknung, bis zum Erhalt einer Restfeuchtigkeit geringer als 1 Gew.% in Bezug auf das Gesamtgewicht der Zuckerzusammensetzung.

**13.** Verfahren gemäß Anspruch 12, bei welchem man ein Ausgangsmittel verwendet, das als Kristallisationskern dient, insbesondere Puderzucker.

**14.** Verfahren gemäß Anspruch 13, bei welchem man den als Kristallisationskern verwendeten Puderzucker weglässt, wenn man die Zuckerzusammensetzung in einer Menge erhält, die ausreicht um teilweise als Kristallisationskern verwendet zu werden.

**15.** Verfahren gemäß Anspruch 13, in dem man die Verwendung von Puderzucker weglässt, wenn die Menge des erhaltenen Zuckers ungefähr mindestens gleich 5 mal der Menge des anfänglich als Kristallisationskern verwendeten Puderzuckers ist.

**16.** Pulverförmige Zusammensetzung von komprimierbarem Zucker, wie sie durch das Verfahren gemäß einem der Ansprüche 9 bis 15 erhalten wird.

**17.** Verwendung einer pulverförmigen Zusammensetzung von komprimierbarem Zucker gemäß einem der Ansprüche 1 bis 6 oder 16, für die Herstellung von Tabletten oder Süßwaren.

FIGURE 1

**FIGURE 2**

FIGURE 3

FIGURE 4

FIGURE 5

**FIGURE 6**

**FIGURE 7**

**FIGURE 8**

**FIGURE 9**

Force d'éjection (N)

Force de compression (kN)